# EUROPEAN PATENT APPLICATION

(11) **EP 4 016 239 A1**
(43) Date of publication of application: **22.06.2022**
(21) Application number: 20215226.0
(22) Date of filing: 17.12.2020
(51) Int. Cl.: G06F 1/16, H01Q 1/22

(54) **INTEGRATED ANTENNA CONTROL MECHANISM ON LID WITH LID CONTROLLER HUB**

(71) Applicant: INTEL Corporation, Santa Clara, CA 95054 (US)
(72) Inventor: THAKUR, Jayprakash, 560035 Bangalore (IN); PIOUS, Aiswarya, 560103 Bangalore KA (IN); SINGH, Navneet, 560029 BANGALORE KA (IN)
(74) Representative: 2SPL Patentanwälte PartG mbB

(57) **Abstract**

A circuit assembly for installation in a laptop lid is disclosed. The assembly includes a plurality of connectors for wired communication with a base of a laptop, and an Rf connector for wired Rf communication with the base.

## Description

### Field

Examples relate to electronic components for laptop computers and laptop computers.

### Background

Laptops for personal computing may be sleek, thin, and light. A laptop's electronics are found in the base and lid of the laptop. The base may have circuitry and memory to enable much of the functionalities of a modern laptop computer. The lid of a laptop may also include multiple electronic functionalities, such as a display, camera, and microphone. Speakers and antennas may also be distributed around the laptop in the base and/or lid.

Laptop and circuitry for laptops may be distributed worldwide for various markets. Modern laptops usually are capable of connecting to a wireless network. Different markets may have different regions of the radio spectrum allocated for wireless communication by personal computing devices.

### Brief Description of the Figures

Some examples of apparatuses and/or methods will be described in the following by way of example only, and with reference to the accompanying figures, in which
Fig. 1 illustrates a laptop including a circuit assembly.
Fig. 2 illustrates a circuit assembly and modem.
Fig. 3 illustrates a circuit assembly and modem.
Fig. 4 illustrates a tuner circuit.
Fig. 5 illustrates a laptop computer.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

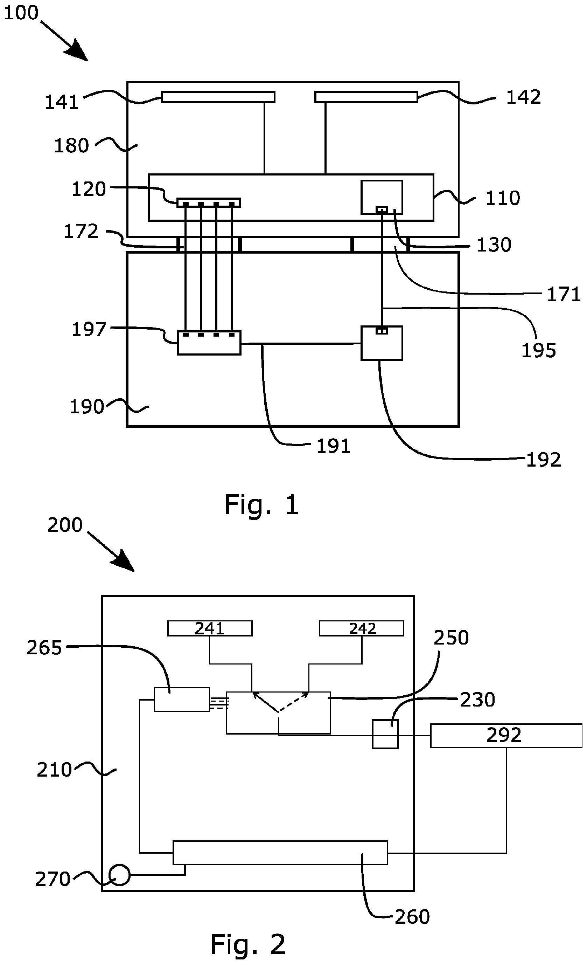

Fig. 1 illustrates a laptop, or computer laptop assembly 100. The laptop 100 includes a laptop lid 180 and base 190. A circuit assembly 110 is installed in the laptop lid 180. The circuit assembly 110 has connectors 120 which are in wired communication with the base 190. The communication signals between the lid 180 and base 190, such as those passing through the connectors 120, may include signals for the display, a camera, and/or a microphone, for example, which may be installed in the laptop lid 180. The circuit assembly 110 may also send and/or receive radiofrequency (Rf) signals, such as through an Rf connector 130.

The circuit assembly 110 of Fig. 1 also includes an Rf connector 130 for wired Rf communication with the base 190, *e.g*. between the lid 180 and the base 190. For example, an Rf signal from the base 190, which may pass through the Rf connector 130 in the lid 180, may be used for wireless communication via at least one antenna 141, 142 which is in the laptop lid 180. The Rf connector 130 of the circuit assembly 110 in the lid 180 may be coupled via a Rf cable 195 to a modem 192 and/or host located in the base 190.

The Rf connector 130 can be at a first end of the circuit assembly 110. The Rf connector 130 can be aligned with a first hinge 171. The connectors 120 can be at a second end of the circuit assembly 110, *e.g.* such that the connectors 120 are aligned with a second hinge 172. The first and second ends of the circuit assembly 110 may be ends of a printed circuit board, such as a timing control printed circuit board (T-CON PCB). The circuit assembly 110 may be entirely assembled on the PCB, *e.g.* on the T-CON PCB.

In examples in which the Rf connector 130 is alignable with a first hinge 171, and the connectors 120 are alignable with a second hinge 172, the PCB may be of a size in accordance with the spacing between hinges which may vary depending on the size of the laptop.

The circuit assembly 110, such as that illustrated in Fig. 1, may have fewer wired connections between the lid 180 and base 190, particularly compared to other laptop circuit assemblies which are used in laptop lids. The hinge diameters can be reduced, which can allow for a sleeker laptop.

For example, the laptop 100 may lack a wired connection between a modem in the lid and a system on a chip (SoC) 197, circuitry, mainboard, or the like, in the base 190. As illustrated in Fig. 1, there can be a wired connection 191 (*e.g.* PCIe, peripheral component interconnect express) located in the base 190 which connects a SoC 197 and the modem 192. According to the example shown in Fig. 1, may lack a PCIe connection, for example, which connects the base 190 and lid 180 (*e.g*. between a SoC in the base and a modem in the lid). A circuit assembly 110 which has an Rf connector 130 in the lid 180, such as directly adjacent to a hinge 171 may may allow a modem 192 in the base 190 to be in communication with the circuit assembly 110 and allow the wired connection 191 between SoC 197 and modem 192 to be within the base 190, *e.g.* rather than between the 180 and base 190.

The hinges 171, 172 may connect the laptop lid 180 to the base 190, which may allow for opening and/or closing of the lid 180, and allow for multiple modes of the laptop 100. The laptop 100 illustrated in Fig. 1, particularly the circuit assembly 110 thereof, may allow for a reduction of the thickness of the base 190 and/or a reduction in the diameter of the hinge(s) 171, 172. A sleeker design may be possible, such as by having the modem 192 and SoC 197 in the base 190, which can allow the wired connection 191 between the SoC 197 and modem to be in the base 190.

Advances in wireless connectivity may utilize more than one antenna. For example, 5G wireless capable laptops may have an increased number of antennas. Some antennas may be on the lid 180 and some placed in the base 190. Fig. 1 illustrates two antennas 141, 142 on the lid 180, and it is possible to have at least one more antenna in the base 190. Many possible distributions of antennas are possible, *e.g*. at least one antenna in the base and/or at least one antenna on the lid 180. Multiple antennas may improve wireless performance and/or connectivity, particularly as is described herein, when antennas can be selected so as to optimize a wireless signal. Multiple antennas may also allow for a wider range of the spectrum to be used for wireless communication.

Herein is disclosed a computer laptop assembly 100 which includes a laptop lid 180 which includes the circuit assembly 110 as described herein. The computer laptop assembly 100 also includes base 190 which has a modem 192 which couples to the Rf connector 130 through a hinge 171 that connects the base 190 to the lid 180.

Fig. 2 illustrates a circuit assembly 200 and modem 292. The circuit assembly 200 may be a variation of that of Fig. 1, *e.g.* including at least some features described with respect to Fig. 1. The circuit assembly 200 may be for installation in a lid 180, and the modem 292 for installation in a base 190. The circuit assembly 200 may include a microcontroller 260, or lid controller hub, which may include a processor. The microcontroller 260 may be in communication with the base 190, such as the modem 292 and/or other circuitry of the base 190. The microcontroller 260 can be coupled, *e.g*. wired, to at least one of the connectors 120, *e.g.* on a PCB of the circuit assembly 210, for coupling with the base 190.

In Fig. 2, the Rf connector 230 of the circuit assembly 200 is coupled to a switch 250, which is configured to selectably communicatively couple the Rf connector and at least one antenna 241, 242. The switch 250 may be controlled by control signals 265 which may come from the microcontroller 260. The laptop lid 180 can have a plurality of antennas 241, 242 for selectably coupling to the Rf connector 130.

The microcontroller 260 may cause the switch 250 to select the optimal antenna, depending on conditions. The microcontroller 260 may be configured to select an antenna 241 for coupling by controlling the switch 250 based on a signal from a sensor 270. The sensor 270 may be for determining a laptop configuration, such as a closed configuration (with the lid closed), a standard open configuration (lid open, and a horizontally oriented base), and a tent configuration (lid open with the edges of the lid and base which are opposite to the hinges being substantially in a horizontal plane below the hinges). There may be more than one sensor 270. Sensor(s) may be located in the lid 180 and/or base 190.

For example, a first antenna 241 may perform better in a standard open configuration, and a second antenna 242 may give better performance in a closed configuration. The microcontroller 260 can determine the configuration from the sensor(s) 270, and/or determine an antenna configuration (e.g. which antenna(s) to communicatively couple to the Rf connector 280) from the sensor(s) 270. The microcontroller's determination may be based on signals from the sensor(s) 270. Alternatively/additionally, the microcontroller 260 can receive information (such as signals) from the base 190, and such information may be a basis for the determination of the control signals 265 to transmit to the switch 250, *e.g.* for selectign an antenna..

The microcontroller may utilize hall sensors, accelerometers, proximity sensors, and/or gyrometers as the sensor(s) 270. The sensor(s) 270 may sense various configurations of the laptop and/or provide signals to the microcontroller 260 for determination of the control signals 265.

For example, a sensor 270 may be a proximity sensor which is coupled to an antenna 241 and/or the microcontroller 260. The proximity sensor 270 may be for determining coupling of the Rf connector 230 and antenna 241, 242, *e.g.* by operation of the switch 250. A proximity sensor 270 may, for example, detect when a hand passes by the first antenna 241 causing loss of reception and/or transmission efficiency. The circuit assembly 210, may respond by switching from one antenna 241 to the other 242, *e.g.* by breaking the communicative coupling between the Rf connector 230 and the first antenna 241 and making the communicative coupling between the Rf connector 230 and second antenna 242.

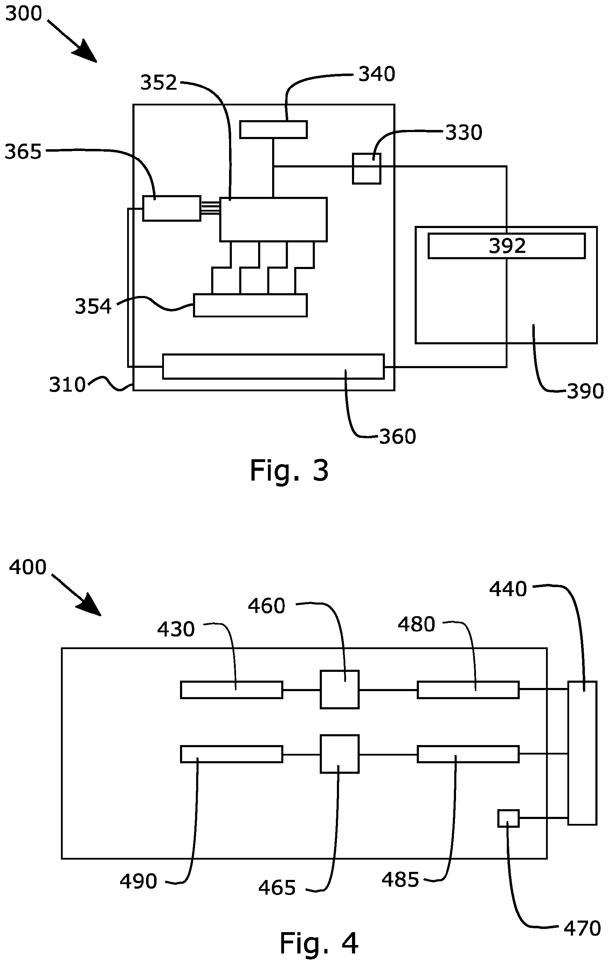

Fig. 3 illustrates a circuit assembly 300 and modem 392 in a laptop base 390. The circuit assembly 300 may be a variation of that of Figs. 1 and/or 2, *e.g.* including at least some features described with respect to Figs. 1 and/or 2. The circuit assembly 200 may be for installation in a lid 180, and the modem 292 for installation in a base 390. The circuit assembly 300 may include an Rf connector 330 for communicatively coupling to the modem 392.

The circuit assembly 300 can include a microcontroller 360, or lid controller hub, which may include a processor. The microcontroller 360 may be in communication with the base 390, such as the modem 392, SoC, and/or other circuitry of the base 390. The microcontroller 360 can be coupled, *e.g*. hardwired, to at least one of the connectors 120, *e.g.* on a PCB of the circuit assembly 310, for coupling with the base 390.

The circuit assembly 300 can include a tuner. Fig. 3 illustrates a circuit assembly with a tuner/switch 352. The microcontroller 360 can be communicatively coupled to the tuner/switch 352. The microcontroller 360 can control the tuner/switch 352. For example, the microcontroller 360 receives a control signal from the base 390, and controls the tuner/switch 352 based on the control signal. A control signal from the base may be determined from regional frequency band information. Alternatively/additionally, the control signal may be regional band information. The circuit assembly 300 can control the antenna(s) so that the antenna(s) may operate in the allocated portion of the spectrum, such as per local regulations.

The microcontroller 360 can possibly control the switch/tuner 352 by selecting an active antenna configuration from a plurality of stored configurations. The selected active antenna configuration may depend on the laptop configuration (open lid, closed lid, tent configuration), and/or regional information regarding spectrum allocation. The active antenna configuration may have at least one antenna communicatively coupled with the modem. The microcontroller 360 may determine which antenna to activate by signals from sensor(s) and/or other information.

An antenna can be tuned to one of multiple frequency bands. The active frequency band can be switched based on switching information and/or input, *e.g.* from memory and/or software loaded in a modem 392, SoC, CPU, and/or host. A modem 392, SoC, and/or CPU can pass regional frequency band information to the microcontroller 360. The active frequency band can be shifted based on the regional frequency band information, *e.g.* by control signals 365 sent to the tuner/switch 352.

The microcontroller 260 can also control the tuner 354 connected to the antenna to tune the antenna performance based on feedback from sensors.

A tuner circuit(s) 354 can also aid in controlling the antenna and/or antenna configuration, for example based on stored and/or preloaded tuner states. An active tuner state can be selected from the stored and/or preloaded tuner states. The stored and/or preloaded tuner states may be optimized tuner configurations based on laptop configuration (open lid, closed lid, *etc.*)*,* regional information in regard to allocated spectral bands, and/or sensor signals which may be sensitive to laptop configuration and/or the environment.

Fig. 3 shows a tuner circuit 354 which may be a matching circuit. The matching circuit can be controlled such that there is improved tuning of the antenna to the desired and/or active frequency band.

A tuner circuit 354 may include analog control and/or digital control. Alternatively/additionally, the tuner circuit 354 may include any combination of: general purpose input/output (GPIO), and mobile industry processor interface (MIPI (Radio frequency front end (RFFE)) from the modem 192, 292, 392 in the base 190 of the laptop 100. Antenna tuner circuit control may be accessed through a user interface which can be displayed by the laptop 100. Antenna control can be from GPIOs and/or MIPI interface, which may provide flexibility to configure the bands of antenna and optimize efficiency. Space can be conserved for better miniaturization.

Fig. 4 illustrates a tuner circuit 400. The tuner circuit 400, *e.g.* a tuner or tuner circuit, may be included in any of the circuit assemblies 110, 210, 310 as described herein. For example, the tuner circuit 400 can be included on a PCB, with the microcontroller. The tuner circuit 400 may include at least one switch.

Fig. 4 shows an antenna 440 which may be selectably communicatively coupled to the tuner circuit 400. The antenna 440, particularly when in the form of a slot antenna, may be part of the laptop lid. A sensor 470, such as proximity sensor is optionally coupled to the antenna, and may be located near the antenna 440. Alternatively/additionally, the sensor 470 can be located on the lid or base.

An Rf connector 430 of the circuit assembly is couplable to the tuner circuit 400, and may be included in the tuner circuit 400, as shown in Fig. 4. The tuner circuit 400 may include an Rf switch 460 and/or an impedance tuning circuit 480 between the Rf connector 430 (*e.g.* for 50 Ohm input on the feed side) and the antenna 440. Between the antenna 440 and ground 490 (e.g. system ground), there may be an aperture tuning circuit 485 and/or Rf switch 465.

The circuit assembly as described herein in various forms may include a tuner circuit 400, or tuner, which has an impedance tuning circuit 480 and an aperture tuning circuit 485 which are for coupling to the antenna 440. The impedance tuning circuit 480 and aperture tuning circuit 485 may be controlled, for example, by the microcontroller 260, 360 as described herein.

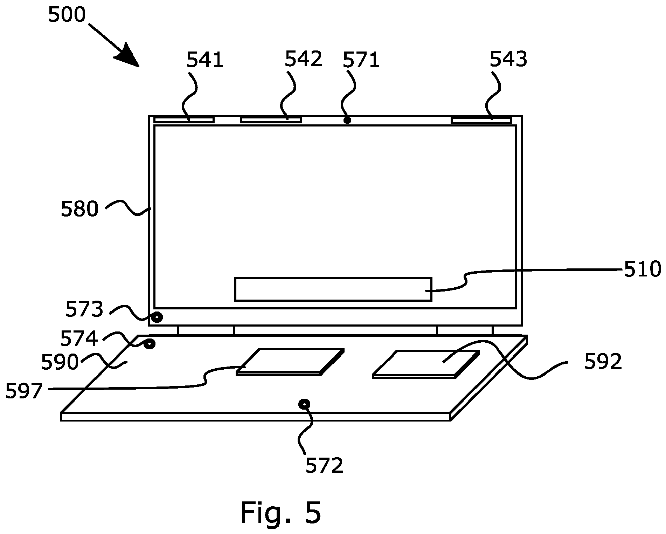

Fig. 5 illustrates a laptop 500. As illustrated, the laptop 500 is in a standard open configuration. The hinges can allow the laptop 500 to take on alternative/additional configurations, such as a closed configuration and tent configuration. Sensor(s) 571, 572, 573, 574 may allow for determination of the configuration of the laptop 500, *e.g.* by the microcontroller 260, 360, circuit assembly 510, SoC 597, and/or CPU. Signals from sensor(s) may be processed by the microcontroller, CPU, SoC or the like for determining the operational state(s) of the antenna(e).

The laptop 500 includes a circuit assembly 510 installed in the lid 480. The circuit assembly 510 may be as described herein, such as with respect to other figures. The circuit assembly 510 may be dimensioned so that a first end of the circuit assembly 510 is at a hinge. An opposite end (*e.g.* a second end) may be at a second hinge. The circuit assembly, or lid controller hub, may be dimensioned to fit in the lid 480 between the display screen and the hinged edge of the lid 480.

The lid 580 of the laptop 500 may be as described herein, such as in regard to other figures. The lid 580 of the laptop 500 may have multiple antennas 541, 542, 543. The base 590 of the laptop 500 may have a modem 592. The base 590 may also include a SoC 597 and/or CPU.

Herein, a computer laptop assembly 100 can include a plurality of sensors 270, 470 in the base 190 and/or lid 180. The sensors 270, 470 can be for determining the laptop configuration. Each of the sensors 270, 470 may be coupled to the microcontroller 260, 360, SoC, central processing unit (CPU), antennas, or the like. The sensor signals may be used to determine, for example, the state of the tuner and/or switch. For example, the microcontroller 260, 30 of the computer laptop assembly 100 controls the switch and/or tuner based on a plurality of sensor information including sensor information associated with the laptop configuration.

Herein, the antennas 141, 142, 241, 242 described may be slot antennas, which may couple to the tuner and/or switch to enable wireless communication for the laptop. Herein at least one of a plurality of antennas of the computer laptop may be configured for 5G operation.

It is possible to provide an option to tune antenna performance based on the system mode in which the laptop and/or antenna is going to operate, including taking into consideration the allocated portion of the spectrum of operation and/or the laptop configuration. General purpose input/outputs (GPIOs) from microcontroller can be used to configure the antenna performance as an input to the Rf switch to configure the antenna, switch, and/or tuner. It is possible to provide flexibility to the original equipment manufacturer and/or original design manufacturer (ODM) (OEM/ODM) to tune the antenna based on system variations, and to allow delivery of products for meeting the quality of service QOS.

For example, with 5G ecosystem having wider operating bands, and each geolocation having the different set of operating frequency bands, the same hardware design can be used seamlessly and the antenna(s) can be configured accordingly based on the country where the devices needs to be used and the relevant portion of the spectrum. It is possible to integrate the circuit assemblies described herein in the dynamic platform and thermal framework feature in order to mitigate the radiofrequency interference (RFI) issue in the system by providing multiple options and knobs, *e.g*. in a user interface that allows access to settings of the microcontroller, switch, and/or tuner. A user may control the interferences between antenna and various other subsystems on the device while maximizing performance.

Each circuit assembly 110, 210, 310, 510 described herein may be disconnected from the modem 192, 292, 392, 592, *e.g.* before assembly of the laptop computer 100, 500. An Rf cable, for example, can be removably connected to the Rf connector 130, 230, 330.

Examples can include subject matter such as a method, means for performing acts or blocks of the method, and at least one machine-readable medium (*e.g*. a computer readable medium, which may be a nontransitory medium) including instructions that, when performed by a machine cause the machine to perform acts of the method or of an apparatus or system for concurrent communication using multiple communication technologies according to examples described herein.

For convenience and/or further description, an enumerated list of examples are provided hereinbelow in which reference numerals are to aid in understanding and are not intended to be limiting.

Enumerated example 1 is a circuit assembly (110) for installation in a laptop lid (180), comprising: a plurality of connectors (120) for wired communication with a base (190) of a laptop (100); and an Rf connector (130) for wired Rf communication with the base (190).

Enumerated example 2 is the circuit assembly (110, 210) of enumerated example 1, further comprising: a switch (250), wherein the Rf connector (130, 230) is coupled to the switch (250), and the switch (250) is configured to selectably communicatively couple the Rf connector (130) and an antenna (241, 242).

Enumerated example 3 is the circuit assembly (110) of any preceding enumerated example, further comprising: a tuner (354, 400), wherein the Rf connector (130) is couplable to the tuner (354, 400); and optionally the tuner (354, 400) includes an impedance tuning circuit (480) and/or an aperture tuning circuit (485) which are for coupling to an antenna (141, 142, 241, 242).

Enumerated example 4 is the circuit assembly (110) of any preceding enumerated example, further comprising: a microcontroller (260) which is coupled to at least one of the connectors of the plurality of connectors (120); wherein the microcontroller (260) is communicatively coupled to the tuner (354, 400) and/or the switch (250, 352); and wherein the microcontroller (260) is configured to control the tuner (354, 400).

Enumerated example 5 is the circuit assembly (110) of enumerated example 4, wherein the microcontroller (260) is configured to select an antenna (141, 142, 241, 242) for coupling by controlling the switch (250, 352) based on a signal from a sensor (270, 470) for determining a laptop configuration associated with at least one of: a closed configuration, a standard open configuration, and a tent configuration.

Enumerated example 6 is the circuit assembly (110) of any of enumerated examples 4-5, wherein the microcontroller (260) is configured to: receive a control signal from the base (190), and control the tuner (354, 400) and/or switch (250, 352) based on the control signal.

Enumerated example 7 is the circuit assembly (110) of any preceding enumerated example, wherein the plurality of connectors (120) are at a first end of a printed circuit board for alignment with a first hinge, and the Rf connector (130) is at a second end of the printed circuit board for alignment with a second hinge; wherein optionally the printed circuit board is a T-CON PCB.

Enumerated example 8 is the circuit assembly (110) of any of enumerated examples 4-7, wherein the microcontroller (260) is configured to control the switch (250, 352) and/or tuner (354, 400) by selecting an active antenna configuration from a plurality of stored configurations; wherein optionally a tuner circuit (354, 400) is configured to aid in controlling the antenna configuration based on stored tuner states.

Enumerated example 9. A laptop lid (180), comprising: the circuit assembly (110) of any preceding enumerated example, and an antenna (141, 142, 241, 242), such as a slot antenna, coupled to the tuner (354, 400) and/or the switch (250, 352) for wireless communication.

Enumerated example 10 is the laptop lid (180) of enumerated example 9, further comprising: a proximity sensor (270, 470) coupled to the antenna (141, 142, 241, 242) and/or the microcontroller (260) for determining coupling of the Rf connector (130) and the antenna (141, 142, 241, 242).

Enumerated example 11 is the laptop lid (180) of enumerated example 9 or 10, further comprising: a plurality of antennas (141, 142, 241, 242) for selectably coupling to the Rf connector (130).

Enumerated example 12 is a computer laptop assembly (100), comprising: the laptop lid (180) of any of enumerated examples 9-11, and a laptop base (190) including a modem (192) coupled to the Rf connector (130) through a hinge connecting the base (190) to the laptop lid (180).

Enumerated example 13 is the computer laptop assembly of enumerated example 12, further comprising: a plurality of sensors (270, 470) in the base (190) and/or lid (180) for determining the laptop configuration.

Enumerated example 14 is the computer laptop assembly of any of enumerated examples 12-13, wherein the microcontroller (260) is configured to: control the switch (250, 352) and/or the tuner (354, 400) based on a plurality of sensor information including sensor information associated with the laptop configuration.

Enumerated example 15 is the computer laptop assembly of any of enumerated examples 12-14, wherein the plurality of sensors (270, 470) includes at one of: a hall sensor, an accelerometer, and a gyrometer.

The examples described herein may optimize a laptop for wireless connectivity, allow for sleeker design, optimize circuitry for use worldwide, and/or optimize antenna use across multiple laptop configurations and/or variable environments. Particularly with the advent of 5G, the number of antennas can increase, such that antenna optimization is more challenging.

Herein, a "wired connection" refers to an electrical connection, which may be direct or indirect, which is not wireless. For example, wired connections may be through wires and/or or conductive paths on circuit boards and the like. A wired connection may be separable. Herein "coupled" can refer to a wired connection. Herein a "tuner/switch" may include the functionality of a tuner, a switch, or each of a tuner and switch.

Herein, a "microcontroller" may be used interchangeably with "lid controller hub." A microcontroller may include a processor and/or memory. Alternatively/additionally, a microcontroller as described herein may include the functionality of a lid controller hub, including at least one of: controlling/processing display signals, controlling/processing display power, controlling and/or processing touch signals, controlling and/or processing touch power, controlling and/or processing general purpose input output(s) (GPIO)s, controlling and/or processing other signals, controlling/processing camera signals, controlling and/or processing audio signals, controlling/processing power, and controlling and/or processing sensor signals.

Herein a trailing "(s)" indicates one or more items. For example, processor(s) means one or more processors. One or more antenna may be written as antenna(e) or antenna(s), for example. Herein, reference numerals are to aid in understanding and are not intended to be limiting.

Herein, a "tuner/switch" can refer to a tuner and/or a switch, such as a circuit which includes at least one of a tuner and a switch.

While examples of apparatuses have been illustrated and described with respect to one or more implementations, alterations and/or modifications may be made to the illustrated examples without departing from the spirit and scope of the appended claims. In particular regard to the various functions performed by the above described components or structures (assemblies, devices, circuits, systems, etc.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations.

In particular regard to the various functions performed by the above described components (assemblies, devices, circuits, systems, *etc.*)*,* the terms (including a reference to a "means") used to describe such components are intended to correspond, unless otherwise indicated, to any component or structure which performs the specified function of the described component (*e.g*., that is functionally equivalent), even though not structurally equivalent to the disclosed structure which performs the function in the herein illustrated exemplary implementations of the disclosure. In addition, while a particular feature may have been disclosed with respect to only one of several implementations, such feature may be combined with one or more other features of the other implementations as may be desired and advantageous for any given or particular application.

The aspects and features described in relation to a particular one of the previous examples may also be combined with one or more of the further examples to replace an identical or similar feature of that further example or to additionally introduce the features into the further example.

Herein, SoCs, processors, control units, (field) programmable logic arrays ((F)PLAs), (field) programmable gate arrays ((F)PGAs), graphics processor units (GPU), application-specific integrated circuits (ASICs), and integrated circuits (ICs) may be used interchangeably.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other in-dependent claim, even if that claim is not directly defined as dependent on that other inde-pendent claim.

## Claims

1. A circuit assembly (110) for installation in a laptop lid (180), comprising:
a plurality of connectors (120) for wired communication with a base (190) of a laptop (100); and
an Rf connector (130) for wired Rf communication with the base (190).

2. The circuit assembly (110, 210) of claim 1, further comprising:
a switch (250), wherein
the Rf connector (130, 230) is coupled to the switch (250), and
the switch (250) is configured to selectably communicatively couple the Rf connector (130) and an antenna (241, 242).

3. The circuit assembly (110) of any preceding claim, further comprising:
a tuner (354, 400), wherein
the Rf connector (130) is couplable to the tuner (354, 400); and optionally the tuner (354, 400) includes an impedance tuning circuit (480) and/or an aperture tuning circuit (485) which are for coupling to an antenna (141, 142, 241, 242).

4. The circuit assembly (110) of any preceding claim, further comprising:
a microcontroller (260) which is coupled to at least one of the connectors of the plurality of connectors (120); wherein
the microcontroller (260) is communicatively coupled to the tuner (354, 400) and/or the switch (250, 352); and wherein
the microcontroller (260) is configured to control the tuner (354, 400).

5. The circuit assembly (110) of claim 4, wherein
the microcontroller (260) is configured to select an antenna (141, 142, 241, 242) for coupling by controlling the switch (250, 352) based on a signal from a sensor (270, 470) for determining a laptop configuration associated with at least one of: a closed configuration, a standard open configuration, and a tent configuration.

6. The circuit assembly (110) of any of claims 4-5, wherein
the microcontroller (260) is configured to:
receive a control signal from the base (190), and
control the tuner (354, 400) and/or switch (250, 352) based on the control signal.

7. The circuit assembly (110) of any preceding claim, wherein
the plurality of connectors (120) are at a first end of a printed circuit board for alignment with a first hinge, and
the Rf connector (130) is at a second end of the printed circuit board for alignment with a second hinge; wherein optionally
the printed circuit board is a T-CON PCB.

8. The circuit assembly (110) of any of claims 4-7, wherein
the microcontroller (260) is configured to control the switch (250, 352) and/or tuner (354, 400) by selecting an active antenna configuration from a plurality of stored configurations; wherein optionally
a tuner circuit (354, 400) is configured to aid in controlling the antenna configuration based on stored tuner states.

9. A laptop lid (180), comprising:
the circuit assembly (110) of any preceding claim, and
an antenna (141, 142, 241, 242), such as a slot antenna, coupled to the tuner (354, 400) and/or the switch (250, 352) for wireless communication.

10. The laptop lid (180) of claim 9, further comprising:
a proximity sensor (270, 470) coupled to the antenna (141, 142, 241, 242) and/or the microcontroller (260) for determining coupling of the Rf connector (130) and
the antenna (141, 142, 241, 242).

11. The laptop lid (180) of claim 9 or 10, further comprising:
a plurality of antennas (141, 142, 241, 242) for selectably coupling to the Rf connector (130).

12. A computer laptop assembly (100), comprising:
the laptop lid (180) of any of claims 9-11, and
a laptop base (190) including a modem (192) coupled to the Rf connector (130) through a hinge connecting the base (190) to the laptop lid (180).

13. The computer laptop assembly of claim 12, further comprising:
a plurality of sensors (270, 470) in the base (190) and/or lid (180) for determining the laptop configuration.

14. The computer laptop assembly of any of claims 12-13, wherein
the microcontroller (260) is configured to:
control the switch (250, 352) and/or the tuner (354, 400) based on a plurality of sensor information including sensor information associated with the laptop configuration.

15. The computer laptop assembly of any of claims 12-14, wherein
the plurality of sensors (270, 470) includes at one of: a hall sensor, an accelerometer, and a gyrometer.
